# EUROPEAN PATENT APPLICATION

(11) **EP 1 235 366 A1**
(43) Date of publication of application: **28.08.2002**
(21) Application number: 01976838.1
(22) Date of filing: 26.10.2001
(51) Int. Cl.: H04B 7/26

(54) **MOBILE STATION APPARATUS AND HANDOVER METHOD**

(30) Priority: 31.10.2000 JP 2000333084
(71) Applicant: MATSUSHITA ELECTRIC INDUSTRIAL CO., LTD., Kadoma-shi, Osaka 571-8501 (JP)
(72) Inventor: NAKANO, Takayuki, Yokosuka-shi, Kanagawa 239-0842 (JP)
(74) Representative: Grünecker, Kinkeldey, Stockmair & Schwanhäusser Anwaltssozietät
(86) International application number: JP0109429
(87) International publication number: WO02037715

(57) **Abstract**

A demodulation section 104 demodulates received signals, and then extracts transmission power information from the received signals and inputs this information to a transmission power information storage section 107. By this means, transmission power values are stored in the transmission power information storage section 107 for each base station. A reception level measurement section 105 measures the reception level of a signal received by an antenna 101 for each base station, and inputs the measured reception level to a reception level storage section 108. By this means, reception levels are stored in the transmission power information storage section 107 for each base station. When reception levels stored in the reception level storage section 108 are equal at the time of a handover, a handover control section 106 determines a base station that has the smallest transmission power value among the transmission power values stored in the transmission power information storage section 107 to be a base station to which call connection will be made.

## Description

### Technical Field

The present invention relates to a mobile station apparatus and handover method. A mobile station apparatus is, specifically, a mobile phone, an information communication terminal apparatus provided with mobile phone functions and computer functions, or the like, that performs radio communication with a base station apparatus connected to a cable network in a mobile communication system.

### Background Art

In a mobile communication system, a method (cell configuration) is used whereby a plurality of base stations are located in a service area, and the entire service area is covered by this plurality of base stations. In order for a mobile station to maintain communication when it moves between cells and crosses a cell boundary, it performs handover that switches its communicating-party base station to the base station of the cell into which the mobile station is moving.

Base stations are positioned irregularly according to the region, and therefore cells are generally of various sizes. The smaller the cell size, the shorter is the distance between a mobile station and a base station, and consequently the lower is the power required for a signal transmitted from a mobile station. Therefore, for a mobile station with limited battery capacity, performing communication with a base station located in a small cell is advantageous in terms of reducing power consumption and extending communication time.

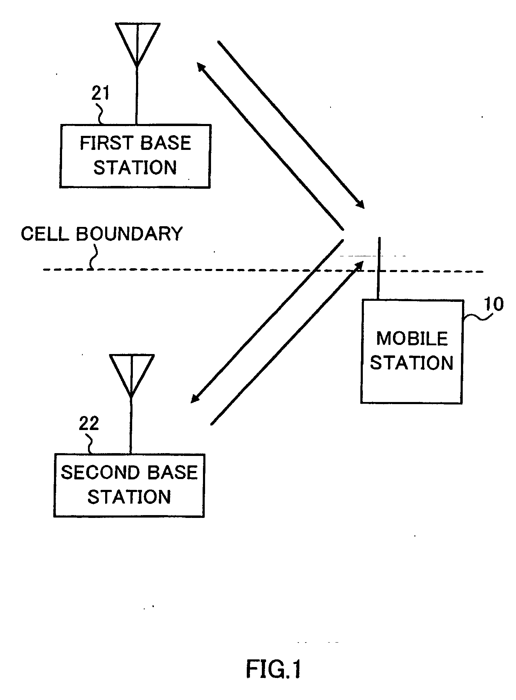

A conventional handover method is described below with reference to a mobile communication system configuration diagram shown in FIG.1. It is here assumed that a mobile station 10 is currently located near a cell boundary. In the vicinity of the cell boundary, an area covered by a first base station 21 and an area covered by a second base station 22 overlap, and the mobile station 10 performs handover in this area of overlap. In this case, both the first base station 21 and second base station 22 are candidates for call connection destination. At this time, the mobile station 10 performs call connection to the base station with the higher signal reception level. That is to say, the mobile station 10 compares the reception level of a signal transmitted from the first base station 21 with the reception level of a signal transmitted from the second base station 22, and performs call connection to the base station that transmitted the signal with a higher reception level. In the vicinity of the cell boundary, both reception levels are equal, and therefore there is a possibility of the mobile station 10 performing call connection to both the first base station 21 and second base station 22.

Here, as stated above, base stations are positioned irregularly and cells are generally of various sizes. In this case, the larger the cell size, the greater is the distance from a base station to a cell boundary. Also, as described above, when a mobile station is located near a cell boundary, there is a possibility of it performing call connection to either of the base stations located in the respective cells. That is to say, in the vicinity of a cell boundary, there is a possibility of a mobile station performing call connection to a base station located farther away. In FIG.1, for example, if the cell of the second base station 22 is larger than the cell of the first base station 21, there is a possibility of the mobile station 10 performing call connection to the second base station 22, which is located at a greater distance than the first base station 21 as seen from the mobile station 10.

When call connection is performed to a more distant base station in this way, a mobile station has to transmit a signal at a higher power than the mobile station transmits a signal to a nearer base station. Therefore, mobile station power consumption will increase. As a result of the increase in mobile station power consumption, the battery will be emptied sooner and possible communication time is shortened.

Also, the greater the distance between a mobile station and a base station, the higher is the power at which the mobile station must transmit a signal. Consequently, interference effected on communications of other mobile stations will increase, and there will be an overall deterioration of communication quality in uplinks from mobile stations to a base station.

Moreover, the more distant base station a signal is transmitted to, the weaker its power is, and there is consequently an increase in the number of cases where an uplink signal does not reach a base station and call connection fails.

### Disclosure of Invention

It is an object of the present invention to provide a mobile station apparatus and handover method whereby it is possible to prevent an increase in power consumption, deterioration of uplink communication quality, and failure of call connection. In order to achieve this object, in the present invention, a call is connected to a base station nearest to a mobile station.

### Brief Description of Drawings

FIG.1 is a configuration diagram of a mobile communication system;
FIG.2 is a block diagram showing the configuration of a mobile station apparatus according to Embodiment 1 of the present invention;
FIG.3 is a block diagram showing the configuration of a mobile station apparatus according to Embodiment 2 of the present invention;
FIG.4 is a block diagram showing the configuration of a mobile station apparatus according to Embodiment 3 of the present invention; and
FIG.5 is a block diagram showing the configuration of a mobile station apparatus according to Embodiment 4 of the present invention.

### Best Mode for Carrying out the Invention

With reference now to the accompanying drawings, embodiments of the present invention will be explained in detail below.

### (Embodiment 1)

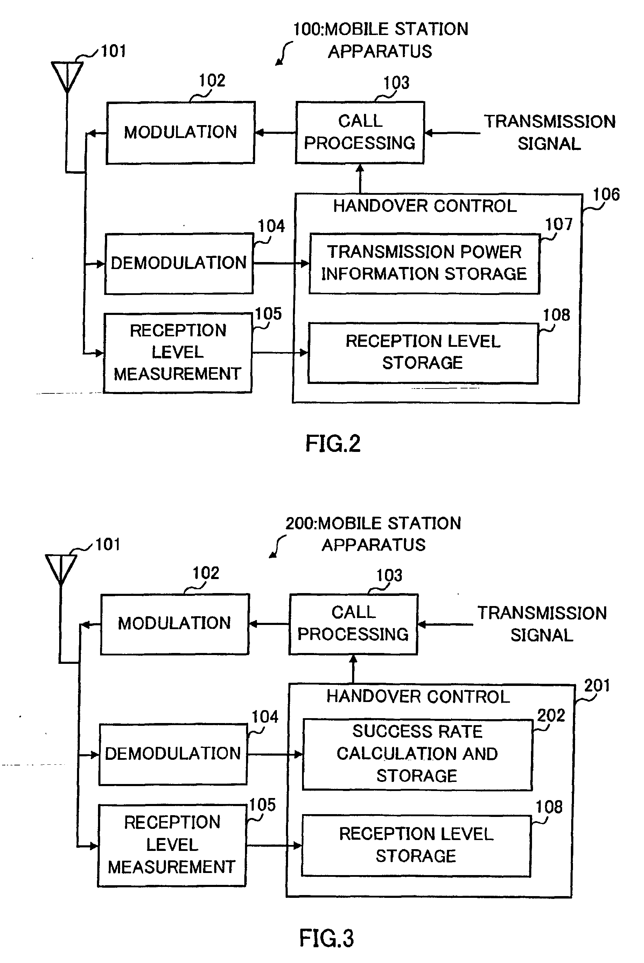

FIG.2 is a block diagram showing the configuration of a mobile station apparatus according to Embodiment 1 of the present invention. The mobile station apparatus 100 shown in FIG.2 comprises an antenna 101, modulation section 102, call processing section 103, demodulation section 104, reception level measurement section 105, and handover control section 106. The handover control section 106 has a transmission power information storage section 107 and a reception level storage section 108.

The antenna 101 receives signals transmitted from a plurality of base stations that are call connection destination candidates, and transmits a signal to a base station to which a call is to be connected.

The demodulation section 104 demodulates signals received by the antenna 101. Signals transmitted from a plurality of base stations include a signal transmission power value (transmission power information) for each of the base stations. For example, each base station transmits transmission power information superimposed on a broadcast channel signal used for communication with the mobile station apparatus 100 prior to call connection. By means of this transmission power information, the mobile station apparatus 100 can ascertain the transmission power value of a received signal at the time of transmission in each base station. After demodulating the received signals, the demodulation section 104 extracts transmission power information from the received signals and inputs this information to the transmission power information storage section 107. By this means, a transmission power value is stored for each base station in the transmission power information storage section 107.

The reception level measurement section 105 measures the reception level of a signal received by the antenna 101 for each base station, and inputs this reception level to the reception level storage section 108. For example, the reception level of a broadcast channel signal transmitted from each base station may be measured. By this means, a reception level is stored for each base station in the reception level storage section 108.

At the time of a handover, the handover control section 106 determines the base station that is to be the call connection destination, based on reception levels stored in the reception level storage section 108 and transmission power values stored in the transmission power information storage section 107. That is to say, the handover control section 106 performs handover control. To be specific, handover control is performed as follows.

The larger a cell is in which a base station is located, the greater the distance to the cell boundary is, and therefore, a signal needs to be transmitted with a higher transmission power for the signal to reach the cell boundary. Thus, when a mobile station is located near a cell boundary, comparing the transmission power values of different base stations indicated by transmission power information is equivalent to comparing base-station-to-mobile-station distances among base stations. Also, in the vicinity of a cell boundary, the reception level of a signal transmitted from each base station is equal. Thus, when reception levels of base stations stored in the reception level storage section 108 are equal, the handover control section 106 selects a base station whose transmission power value is the smallest among the transmission power values indicated by the transmission power information stored in the transmission power information storage section 107. Then the call processing section 103 is notified of the selected base station. That is to say, the handover control section 106 controls the call processing section 103 so that, of a plurality of base stations that are call connection destination candidates, a call is connected to a base station nearest the mobile station apparatus 100.

The expression "when a reception level ... is equal" here includes a case where the difference in reception level is within a predetermined range (that is, when reception levels are almost equal) as well as a case where reception levels are absolutely identical. The same applies to embodiments below.

The call processing section 103 performs call connection (call processing) in accordance with control by the handover control section 106. That is to say, the call processing section 103 transmits a transmission signal in a radio channel assigned to a base station notified by the handover control section 106. The "radio channel" actually refers to a specific frequency band in the case of FDMA, to a specific time slot in the case of TDMA, and to a specific spreading code sequence in the case of CDMA. Thus, in the case of CDMA, the call processing section 103 spreads the transmission signal using the specific spreading code sequence assigned to the base station selected by the handover control section 106. The transmission signal that has undergone call processing is modulated by the modulation section 102 and then transmitted from the antenna 101.

The handover method used by the mobile station apparatus 100 with the above configuration will now be described with reference to the mobile communication system configuration diagram shown in FIG.1. In this description, the mobile station 10 shown in FIG.1 is replaced by the mobile station apparatus 100 according to Embodiment 1.

It is here assumed, for example, that a transmission power value Pa is transmitted from the first base station 21 to the mobile station apparatus 100, and a transmission power value Pb is transmitted from the second base station 22 to the mobile station apparatus 100. When the cell of the second base station 22 is larger than the cell of the first base station 21, the transmission power value of a signal transmitted from the second base station 22 will be greater. That is to say, the result of a comparison by the handover control section 106 will be Pa < Pb. In the case that the reception level of a signal transmitted from the first base station 21 and the reception level of a signal transmitted from the second base station 22 are equal when the mobile station apparatus 100 is located near their cell boundary, the handover control section 106 determines, from the fact that Pa < Pb, that the first base station 21 is located nearer to the mobile station apparatus 100 than the second base station 22, and identifies the first base station 21 as the base station for call connection. In this way, the mobile station apparatus 100 can select the first base station 21, which is advantageous from the standpoint of reduction of power consumption, improvement of uplink communication quality, and improvement of call connection rate.

Thus, according to the mobile station apparatus of Embodiment 1, when the reception levels of signals transmitted from different base stations are equal, the distance from each base station is determined based on the transmission power value of each base station, thereby making it possible to perform call connection to a base station nearest to the mobile station at the time of a handover.

### (Embodiment 2)

A mobile station apparatus according to Embodiment 2 of the present invention has almost the same configuration as the mobile station apparatus according to Embodiment 1, but differs from Embodiment 1 in that a base station of a higher call connection success rate will be determined to be a base station nearer to a mobile station apparatus.

Normally, a mobile station apparatus issues a signal requesting call connection (call connection request) to a base station selected as a call connection destination. An error detection code such as a CRC (Cyclic Redundancy Check) code is added to this call connection request, and the base station uses this error detection code to detect the presence or absence of an error that has occurred during transmission. The base station then sends back to the mobile station apparatus a signal indicating the presence or absence of an error. When there is no error, the base station accepts the call connection request made by the mobile station apparatus. This is the procedure normally carried out in a mobile communication system. As a signal indicating the presence or absence of an error in a call connection request is sent back in this way, the mobile station apparatus can determine that call connection has failed when the presence of an error is indicated, and can determine that call connection has succeeded when absence of an error is indicated.

Transmission of the call connection request here includes both message transmission of a transmission request and response message transmission to a reception request. The former includes, for example, information such as the telephone number of the communicating-party mobile station apparatus.

A mobile communication system is also possible in which a base station sends back a response signal to a mobile station apparatus only when there is no error (that is, when a call connection request is accepted) . In this case, the mobile station apparatus can determine that call connection has succeeded when the response signal is sent back, and can determine that call connection has failed when the response signal is not sent back within a predetermined time.

In general, the shorter the distance between a base station and mobile station is, the higher the proportion of successful call connections (the call connection success rate) is. Thus, in this embodiment, a base station with the highest call connection success rate is determined to be the base station nearest to a mobile station apparatus, and a call is connected to that base station.

FIG.3 is a block diagram showing the configuration of a mobile station apparatus according to Embodiment 2 of the present invention. The sections in FIG.3 identical to those in Embodiment 1 (FIG.2) will be given the same numerals as in FIG. 2 without further descriptions . The mobile station apparatus 200 shown in FIG.3 differs from the mobile station apparatus 100 shown in FIG.2 in that the handover control section 201 is provided with a success rate calculation and storage section 202 instead of the transmission power information storage section 107.

As described above, a base station to which a mobile station apparatus issues a call connection request sends back a signal indicating the presence or absence of an error in the call connection request. This signal is received by the antenna 101, demodulated by the demodulation section 104, and input to the success rate calculation and storage section 202. The success rate calculation and storage section 202 can calculate the call connection success rate by dividing the number of times an "absence of error" indication is sent back from a base station by the number of times a call connection request has been issued up to that time. The success rate calculation and storage section 202 calculates and stores this call connection success rate for each base station.

Then, at the time of a handover, the handover control section 201 determines the base station that is to be the call connection destination based on reception levels stored in the reception level storage section 108 and call connection success rates stored in the success rate calculation and storage section 202. That is to say, the handover control section 201 performs handover control. To be specific, handover control is performed as follows.

As stated above, in general, the shorter the distance between a base station and mobile station is, the higher the call connection success rate is. Thus, when a mobile station is located near a cell boundary, comparing the call connection success rates of different base stations is equivalent to comparing base-station-to-mobile-station distances among base stations. Also, in the vicinity of a cell boundary, the reception level of a signal transmitted from each base station is equal. Thus, when reception levels of base stations stored in the reception level storage section 108 are equal, the handover control section 201 selects a base station with the highest success rate among the call connection success rates stored in the success rate calculation and storage section 202. Then the call processing section 103 is notified of the selected base station. That is to say, the handover control section 201 controls the call processing section 103 so that a call is connected to a base station nearest the mobile station apparatus 200.

The handover method used by the mobile station apparatus 200 with the above configuration will now be described with reference to the mobile communication system configuration diagram shown in FIG.1. In this description, the mobile station 10 shown in FIG.1 is replaced by the mobile station apparatus 200 according to Embodiment 2.

It is here assumed, for example, that the success rate of call connection to the first base station 21 is Sa, and the success rate of call connection to the second base station 22 is Sb. When the cell of the second base station 22 is larger than the cell of the first base station 21, the call connection success rate for the first base station 21 will be higher. That is to say, the result of comparison by the handover control section 201 will be Sa > Sb. In the case that the reception level of a signal transmitted from the first base station 21 and the reception level of a signal transmitted from the second base station 22 are equal when the mobile station apparatus 200 is located near their cell boundary, the handover control section 201 determines, from the fact that Sa > Sb, that the first base station 21 is located nearer to the mobile station apparatus 200 than the second base station 22, and identifies the first base station 21 as a base station for call connection. In this way, the mobile station apparatus 200 can select the first base station 21, which is advantageous from the standpoint of reduction of power consumption, improvement of uplink communication quality, and improvement of call connection rate.

Thus, according to the mobile station apparatus of Embodiment 2, when the reception levels of signals transmitted from different base stations are equal, the distance from each base station is determined based on the success rate of call connection to each base station, thereby making it possible to perform call connection to a base station nearest to a mobile station at the time of handover.

Also, call connection success rates can be calculated using information normally sent from base stations, and it is not necessary to obtain special information from base stations (such as the transmission power information in Embodiment 1, for example). Consequently, it is not necessary to change existing normal communication procedures. That is to say, a mobile station apparatus can perform call connection to the nearest base station without any modifications having to be made to existing base stations. Thus, application to a system is easier than in the case of Embodiment 1.

At the time of location registration, also, a message for the purpose of location registration is transmitted from a mobile station apparatus, and an indication of the presence or absence of an error is sent back from a base station in response to that message in the same way as described above, so that it is also possible to calculate location registration success rates in a similar way to call connection failure rates, and to select the base station with the highest such success rate.

### (Embodiment 3)

A mobile station apparatus according to Embodiment 3 of the present invention has almost the same configuration as a mobile station apparatus according to Embodiment 2, but differs from Embodiment 2 in that a base station of a lower call connection failure rate will be determined to be a base station nearer to a mobile station apparatus. In Embodiment 2, call connection success rates are calculated. In Embodiment 3, on the other hand, call connection failure rates are calculated instead of call connection success rates. A base station with the lowest call connection failure rate is then determined to be a base station located nearest to a mobile station apparatus, and a call is connected to that base station.

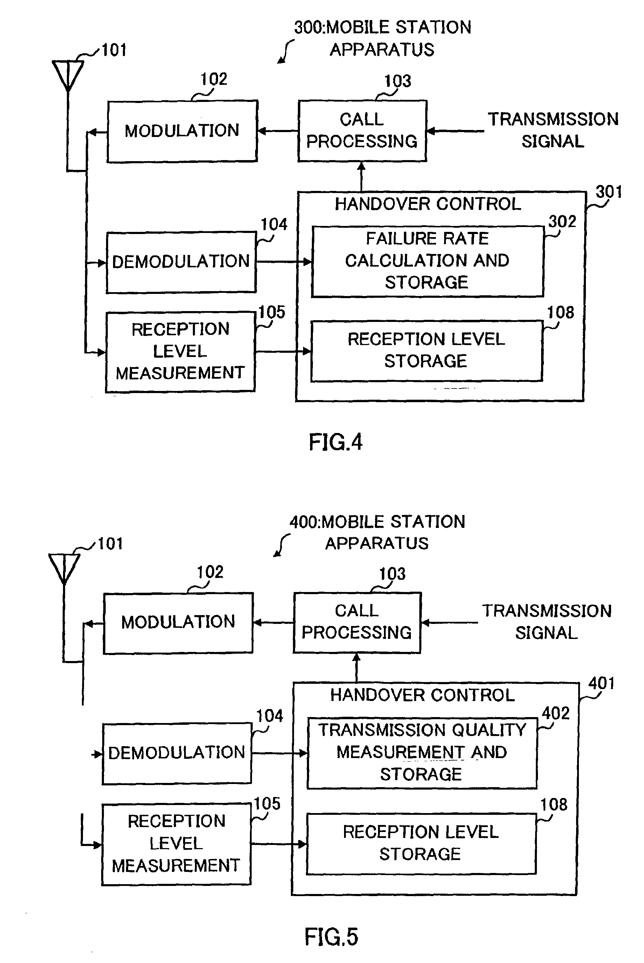

FIG.4 is a block diagram showing the configuration of the mobile station apparatus according to Embodiment 3 of the present invention. The sections in FIG.4 identical to those in Embodiment 1 (FIG.2) will be given the same numerals as in FIG. 2 without further descriptions . The mobile station apparatus 300 shown in FIG.4 differs from the mobile station apparatus 100 shown in FIG.2 in that the handover control section 301 is provided with a failure rate calculation and storage section 302 instead of the transmission power information storage section 107.

As described above, a base station to which a mobile station apparatus issues a call connection request sends back a signal indicating the presence or absence of an error in the call connection request. This signal is received by the antenna 101, demodulated by the demodulation section 104, and input to the failure rate calculation and storage section 302. The failure rate calculation and storage section 302 can calculate the call connection failure rate by dividing the number of times a "presence of error" indication is sent back from a base station by the number of times a call connection request has been issued up to that time. The failure rate calculation and storage section 302 calculates and stores this call connection failure rate for each base station.

In the case of a mobile communication system in which a base station sends a response signal back to a mobile station only when there is no error (that is, when a call connection request is accepted), a mobile station can calculate the call connection failure rate by dividing the number of times that response signal is sent back from a base station within a predetermined time by the number of times a call connection request has been issued up to that time.

Then, at the time of a handover, the handover control section 301 determines a base station that is to be the call connection destination based on reception levels stored in the reception level storage section 108 and call connection failure rates stored in the failure rate calculation and storage section 302. That is to say, the handover control section 301 performs handover control. To be specific, handover control is performed as follows.

As stated above, in general, the shorter the distance between a base station and mobile station is, the higher the call connection success rate is . In other words, the shorter the distance between a base station and mobile station is, the lower the call connection failure rate is. Thus, when a mobile station is located near a cell boundary, comparing the call connection failure rates of different base stations is equivalent to comparing base-station-to-mobile-station distances among base stations. Also, in the vicinity of a cell boundary, the reception level of a signal transmitted from each base station is equal. Thus, when reception levels of base stations stored in the reception level storage section 108 are equal, the handover control section 301 selects the base station with the lowest failure rate among the call connection failure rates stored in the failure rate calculation and storage section 302. Then the call processing section 103 is notified of the selected base station. That is to say, the handover control section 301 controls the call processing section 103 so that a call is connected to a base station nearest the mobile station apparatus 300. Thereafter, the procedure will be the same as in Embodiment 1.

The handover method used by the mobile station apparatus 300 with the above configuration will now be described with reference to the mobile communication system configuration diagram shown in FIG.1. In this description, the mobile station 10 shown in FIG.1 is replaced by the mobile station apparatus 300 according to Embodiment 3.

It is here assumed, for example, that the failure rate of call connection to the first base station 21 is Fa, and the failure rate of call connection to the second base station 22 is Fb. When the cell of the second base station 22 is larger than the cell of the first base station 21, the call connection failure rate for the first base station 21 will be lower. That is to say, the result of comparison by the handover control section 301 will be Fa < Fb. In the case that the reception level of a signal transmitted from the first base station 21 and the reception level of a signal transmitted from the second base station 22 are equal when the mobile station apparatus 300 is located near their cell boundary, the handover control section 301 determines, from the fact that Fa < Fb, that the first base station 21 is located nearer to the mobile station apparatus 300 than the second base station 22, and identifies the first base station 21 as a base station for call connection. In this way, the mobile station apparatus 300 can select the first base station 21, which is advantageous from the standpoint of reduction of power consumption, improvement of uplink communication quality, and improvement of call connection rate.

Thus, according to the mobile station apparatus of Embodiment 3, when the reception levels of signals transmitted from different base stations are equal, the distance from each base station is determined based on the failure rate of call connection to each base station, thereby making it possible to perform call connection to a base station nearest to a mobile station at the time of a handover.

Also, call connection failure rates can be calculated using information normally sent from base stations, and, as in Embodiment 2, it is not necessary to obtain special information from base stations (such as the transmission power information in Embodiment 1, for example). Consequently, it is not necessary to change existing normal communication procedures. That is to say, a mobile station apparatus can perform call connection to the nearest base station without any modifications having to be made to existing base stations. Thus, application to a system is easier than in the case of Embodiment 1.

At the time of location registration, also, a message for the purpose of location registration is transmitted from a mobile station apparatus, and an indication of the presence or absence of an error is sent back from a base station in response to that message in the same way as described above, so that it is also possible to calculate location registration failure rates in a similar way to call connection failure rates, and to select the base station with the lowest such failure rate.

### (Embodiment 4)

A mobile station apparatus according to Embodiment 4 of the present invention has almost the same configuration as a mobile station apparatus according to Embodiment 1, but differs from Embodiment 1 in that a base station of a higher transmission quality will be determined to be a base station nearer to a mobile station apparatus.

In general, the shorter the distance between a base station and mobile station is, the better the transmission quality is. Thus, in this embodiment, a base station with the best transmission quality is determined to be a base station nearest to a mobile station apparatus, and a call is connected to that base station. In the following description, the uplink error rate will be taken as an example of transmission quality.

An error detection code such as a CRC (Cyclic Redundancy Check) code is added to data transmitted from a mobile station apparatus, as well as to an above-described call connection request, and the base station uses this error detection code to detect the presence or absence of an error that has occurred during transmission. The base station then sends back to the mobile station apparatus a signal indicating the presence or absence of an error. As a signal indicating the presence or absence of an error in the data is sent back in this way, the mobile station apparatus can measure the uplink error rate (for example, the frame error rate) . A mobile communication system is also possible in which a base station sends back a response signal to a mobile station apparatus only when there is no error. In this case, the mobile station apparatus will assume that an error has occurred in a signal transmitted to the base station if that response signal is not sent back within a predetermined time.

FIG.5 is a block diagram showing the configuration of the mobile station apparatus according to Embodiment 4 of the present invention. The sections in FIG.5 identical to those in Embodiment 1 (FIG.2) will be given the same numerals as in FIG.2 without further descriptions . The mobile station apparatus 400 shown in FIG.5 differs from the mobile station apparatus 100 shown in FIG.2 in that the handover control section 401 is provided with a transmission quality measurement and storage section 402 instead of the transmission power information storage section 107.

As described above, a base station to which a mobile station apparatus has sent data sends back a signal indicating the presence or absence of an error in the data. This signal is received by the antenna 101, demodulated by the demodulation section 104, and input to the transmission quality measurement and storage section 402. The transmission quality measurement and storage section 402 measures and stores the uplink transmission quality for each base station. Here, the error rate in frame is measured as transmission quality by dividing the number of times a "presence of error" indication is sent back from a base station in one frame by the number of error detection codes contained in one frame. The transmission quality measurement and storage section 402 measures and stores this error rate in frame for each base station.

Then, at the time of a handover, the handover control section 401 determines a base station that is to be a call connection destination based on reception levels stored in the reception level storage section 108 and error rates in frame stored in the transmission quality measurement and storage section 402. That is to say, the handover control section 401 performs handover control. To be specific, handover control is performed as follows.

As stated above, in general, the shorter the distance between a base station and mobile station is, the better the transmission quality is. That is to say, the shorter the distance between a base station and mobile station is, the lower the error rate in frame is. Thus, when a mobile station is located near a cell boundary, comparing the error rates in frame of different base stations is equivalent to comparing base-station-to-mobile-station distances among base stations. Also, in the vicinity of a cell boundary, the reception level of a signal transmitted from each base station is equal. Thus, when reception levels of base stations stored in the reception level storage section 108 are equal, the handover control section 401 selects a base station with the lowest error rate in frame among the error rates in frame stored in the transmission quality measurement and storage section 402. That is to say, the handover control section 401 selects the base station with the best transmission quality.

Then the call processing section 103 is notified of the selected base station. That is to say, the handover control section 401 controls the call processing section 103 so that a call is connected to a base station nearest the mobile station apparatus 400. Thereafter, the procedure will be the same as in Embodiment 1.

The handover method used by the mobile station apparatus 400 with the above configuration will now be described with reference to the mobile communication system configuration diagram shown in FIG.1. In this description, the mobile station 10 shown in FIG.1 is replaced by the mobile station apparatus 400 according to Embodiment 4.

It is here assumed, for example, that the error rate in frame of the first base station 21 is Ea, and the error rate in frame of the second base station 22 is Eb. When the cell of the second base station 22 is larger than the cell of the first base station 21, the error rate in frame of the first base station 21 will be lower. That is to say, the result of comparison by the handover control section 401 will be Ea < Eb. In the case that the reception level of a signal transmitted from the first base station 21 and the reception level of a signal transmitted from the second base station 22 are equal when the mobile station apparatus 400 is located near the cell boundary, the handover control section 401 determines, from the fact that Ea < Eb, that the first base station 21 is located nearer to the mobile station apparatus 400 than the second base station 22, and identifies the first base station 21 as a base station for call connection. In this way, the mobile station apparatus 400 can select the first base station 21, which is advantageous from the standpoint of reduction of power consumption, improvement of uplink communication quality, and improvement of call connection rate.

Thus, according to the mobile station apparatus of Embodiment 4, when the reception levels of signals transmitted from different base stations are equal, the distance from each base station is determined based on the uplink transmission quality of each base station, thereby making it possible to perform call connection to a base station nearest to a mobile station at the time of a handover.

Also, uplink transmission quality (here, error rate in frame) can be measured using information normally sent from base stations, and, as in Embodiment 2, it is not necessary to obtain special information from base stations (such as the transmission power information in Embodiment 1, for example). Consequently, it is not necessary to change existing normal communication procedures. That is to say, a mobile station apparatus can perform call connection to the nearest base station without any modifications having to be made to existing base stations. Thus, application to a system is easier than in the case of Embodiment 1.

In above Embodiments 1 through 4, the reception level measurement section 105 may measure the reception SIR (Signal to Interference Ratio) or the like instead of the reception level. That is to say, anything that can be used as reception quality may be measured. Thus, above Embodiments 1 through 4 can be similarly implemented with "reception level" read as "reception quality" in all cases.

As described above, according to the present invention, a call can be connected to a nearer base station, and by this means it is possible to prevent an increase in power consumption, deterioration of uplink communication quality, and failure of call connection.

This application is based on Japanese Patent Application NO. 2000-333084 filed on October 31, 2000, entire contents of which are expressly incorporated by reference herein.

### Industrial Applicability

The present invention is suitable for use in a mobile communication system, and more particularly a CDMA mobile communication system.

## Claims

1. A mobile station apparatus comprising:
a selector that selects a base station located nearest to said mobile station apparatus from among a plurality of base stations that are call connection destination candidates; and
a connecting device that connects a base station selected by said selector.

2. The mobile station apparatus according to claim 1, further comprising a reception quality measuring device that measures reception quality of signals transmitted from said plurality of base stations for each of said plurality of base stations;
wherein said selector, when reception quality measured by said reception quality measuring device is equal in said plurality of base stations, selects a base station located nearest to said mobile station apparatus from among said plurality of base stations.

3. The mobile station apparatus according to claim 1, further comprising a demodulator that extracts from signals transmitted from said plurality of base stations transmission power values of those signals;
wherein said selector selects a base station that transmits a signal with the smallest transmission power value among transmission power values extracted by said demodulator as a base station located nearest to said mobile station apparatus from among said plurality of base stations.

4. The mobile station apparatus according to claim 1, further comprising a success rate calculator that calculates a success rate of call connection to said plurality of base stations for each of said plurality of base stations;
wherein said selector selects a base station with the highest success rate among success rates calculated by said success rate calculator as a base station located nearest to said mobile station apparatus from among said plurality of base stations.

5. The mobile station apparatus according to claim 1, further comprising a success rate calculator that calculates a success rate of location registration in said plurality of base stations for each of said plurality of base stations;
wherein said selector selects a base station with the highest success rate among success rates calculated by said success rate calculator as a base station located nearest to said mobile station apparatus from among said plurality of base stations.

6. The mobile station apparatus according to claim 1, further comprising a failure rate calculator that calculates a failure rate of call connection to said plurality of base stations for each of said plurality of base stations;
wherein said selector selects a base station with the lowest failure rate among failure rates calculated by said failure rate calculator as a base station located nearest to said mobile station apparatus from among said plurality of base stations.

7. The mobile station apparatus according to claim 1, further comprising a failure rate calculator that calculates a failure rate of location registration in said plurality of base stations for each of said plurality of base stations;
wherein said selector selects a base station with the lowest failure rate among failure rates calculated by said failure rate calculator as a base station located nearest to said mobile station apparatus from among said plurality of base stations.

8. The mobile station apparatus according to claim 1, further comprising a transmission quality measuring device that measures transmission quality of uplinks to said plurality of base stations for each of said plurality of base stations;
wherein said selector selects a base station with the best transmission quality among transmission qualities measured by said transmission quality measuring device as a base station located nearest to said mobile station apparatus from among said plurality of base stations.

9. A base station apparatus comprising:
a superimposing device that superimposes a transmission power value of a broadcast channel signal on that broadcast channel signal used in communication with a mobile station apparatus prior to call connection; and
a transmitter that transmits to said mobile station apparatus the broadcast channel signal on which a transmission power value has been superimposed by said superimposing device.

10. A handover method comprising:
a selecting step of selecting, based on distances between a station in question and a plurality of base stations that are call connection destination candidates, one base station from among said plurality of base stations; and
a connecting step of connecting a call to the base station selected in said selecting step.

11. The handover method according to claim 10, further comprising a reception quality measuring step of measuring reception quality of signals transmitted from said plurality of base stations for each of said plurality of base stations;
wherein, in said selecting step, when reception quality measured in said reception quality measuring step is equal in said plurality of base stations, a base station located nearest to the station in question is selected from among said plurality of base stations.
